# EUROPEAN PATENT APPLICATION

(11) **EP 1 795 307 A2**
(43) Date of publication of application: **13.06.2007**
(21) Application number: 06025116.2
(22) Date of filing: 05.12.2006
(51) Int. Cl.: B25D 17/08, B25B 21/00

(54) **Power impact tool adapter**

(30) Priority: 09.12.2005 JP 2005357008
(71) Applicant: MATSUSHITA ELECTRIC WORKS, LTD., Kadoma-shi, Osaka (JP)
(72) Inventor: Hashimoto, Koichi, Kadoma-shi Osaka (JP); Tsubakimoto, Hiroyuki, Kadoma-shi Osaka (JP); Tatsu, Kunihiko, Kadoma-shi Osaka (JP)
(74) Representative: Samson & Partner

(57) **Abstract**

A power impact tool adapter, for use in installing a bit to be used in a striking-motion-deactivated mode to a power impact tool, includes an SDS type shank portion to be held by a chuck; closed grooves to be mated with sprung balls to prevent the release of the bit; and slide grooves to be slidably mated with wedges applying a rotational force to the bit. An axial length of each slide groove is shorter than that of a slide groove of a standard SDS shank such that the end of the shank portion is prevented from contacting a striking member of the power impact tool which applies a striking force to the bit.

## Description

The present invention relates to a power impact tool adapter; and, more particularly, to a power impact tool adapter capable of transferring a rotational force and applying a striking force in an axial direction to an output bit.

The so called a hammer drill is a power impact tool that is capable of transferring a rotational force and applying a striking force in an axial direction to an output bit. The hammer drill employed for use in a concrete boring operation and the like includes a chuck portion which can be used for installing an output bit typically called an SDS-Plus (Special Direct System Plus) type shank thereinto.

When installing the output bit into the chuck portion having a removal-inhibiting ball (or a sprung ball) and an internal protrusion (or a wedge) for transferring the rotational force, a groove formed at an outer periphery surface of an axis portion for the output bit is engaged with the removal-inhibiting ball while the internal protrusion is slidably engaged with a slide groove formed at the outer periphery surface of the axis portion for the output bit.

Yet, there could be a case in which a screw is required to be fastened into an anchor, wherein the anchor is inserted into a hole created by the concrete boring. Here, since a conventional hammer drill always accompanies the striking force, it is infeasible to fasten the screw with the use of such a drill unless an electric driver is employed in addition. However, since such an operation is inconvenient, there has been a demand for a device which includes a striking-motion-deactivated mode capable of transferring only the rotational force while not applying the striking force to the outer bit as disclosed by Reference Inventions 1 (Japanese Patent Laid-open Application No. 2000-233306) and 2 (Japanese Patent Laid-open Application No. H7-1355). From this, there has been made possible to perform the tasks of boring and fastening with a single hammer drill.

Since the driver bit used in fastening the screw is not configured to adapt the SDS-Plus type shank, it is installed via an adapter having the SDS-Plus type shank.

However, since such conventional adapters are formed with a typical SDS-Plus type shank, it could be subject to a problem such as the one discussed here below, for example. Although there lies no problem when the impact tool is operated in the striking-motion-deactivated mode with the adapter installed thereinto, there could be a case in which the impact tool is inadvertently operated under a striking-motion-activated mode capable of transferring the striking force in an axial direction. In this case, the adapter receives the striking force thereof. By exposing the adapter to this kind of striking force, a holding chuck of the output bit such as a driver bit to be installed into the adapter, the output bit and the fastener in contact with the front end of the output bit can be damaged or destroyed.

It is, therefore, an object of the present invention to provide a power impact tool adapter, which can be safely used with an output bit in a striking-motion-deactivated mode and even if the power impact tool is inadvertently operated under a striking-motion-activated mode.

In accordance with the present invention, there is provided a power impact tool adapter for use with a power impact tool operating in one of a striking-motion-activated mode for transferring a rotational force and applying a striking force in an axial direction of rotation to a bit and a striking-motion-deactivated mode for transferring only the rotational force to the bit, the power impact tool including a striking member applying the striking force to the bit and a chuck for holding the bit, the chuck being adapted to accommodate an SDS (Special Direct System) shank and having sprung balls for preventing the bit from being released from the chuck and wedges for applying the rotational force to the bit, the adapter, for use in installing an output bit to be used in the striking-motion-deactivated mode to the power impact tool, including: a shank portion to be held by the chuck; closed grooves to be mated with the sprung balls; and slide grooves to be slidably mated with the wedges, the closed grooves and the slide grooves being formed on a peripheral surface of the shank portion, wherein an axial length of each slide groove having one end in contact with an end of the shank portion is shorter than that of a slide groove of the SDS shank such that the end of the shank portion is prevented from contacting the striking member of the power impact tool by a positional restriction in the axial direction set by the slide grooves and the wedges.

With this configuration, even if the power impact tool is operated in the striking-motion-activated mode, the striking force is prevented from being applied via striking force transferring members to the adapter in the power impact tool.

Further, the other end of each slide groove may have a slanted surface adapted to match with an end surface shape of each wedge. Accordingly, the end surface shapes of the slide grooves are prevented from being deformed by the wedges.

Further, the SDS shank may be an SDS-Plus shank.

In a power impact tool adapter in accordance with the present invention, a striking force is prevented from being applied to the adapter even if a striking-motion-activated mode capable of applying the striking force to a power impact tool is inadvertently selected. From this, the adapter, or an output bit to be used under a striking-motion-deactivated mode and installed into this adapter, or a screw or the like in contact with the output bit is prevented from being damaged or destroyed from the striking force. Further, not only operational reliability and user safety can be improved, but also since the strength of the adapter is not required to be increased to accommodate the striking force, it can be offered at a low cost.

The above and other objects and features of the present invention will become apparent from the following description of embodiments given in conjunction with the accompanying drawings, in which:
Fig. 1A is a perspective view showing one embodiment of the present invention, and Fig. 1B shows a typical shank thereof;
Fig. 2 is a vertical cross sectional view showing a state in which a striking-motion-deactivated mode is set, in accordance with one example of a tool to be used with an adapter in accordance with the embodiment of the present invention;
Fig. 3 is a horizontal cross sectional view showing the striking-motion-deactivated mode in accordance with the embodiment of the present invention;
Fig. 4 is a vertical cross sectional view showing a state in which a striking-motion-activated mode is set, in accordance with the embodiment of the present invention;
Fig. 5 is a horizontal cross sectional view showing the striking-motion-activated mode in accordance with the embodiment of the present invention;
Fig. 6 is a side view of the tool in accordance with the embodiment of the present invention;
Figs. 7A to 7D show cross sectional views of Fig. 6, cut along the lines 7A-7A, 7B-7B, 7C-7C, and 7D-7D, respectively; and

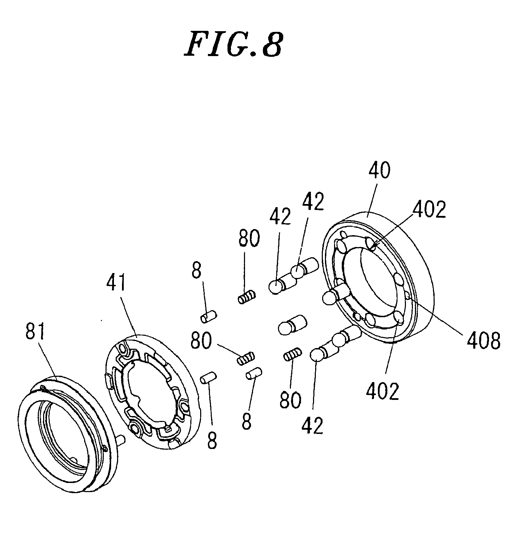

Fig. 8 is an exploded view showing a portion of a fastening torque adjusting clutch in accordance with the embodiment of the present invention.

Hereinafter, there will be described embodiments of the present invention with reference to the accompanying drawings.

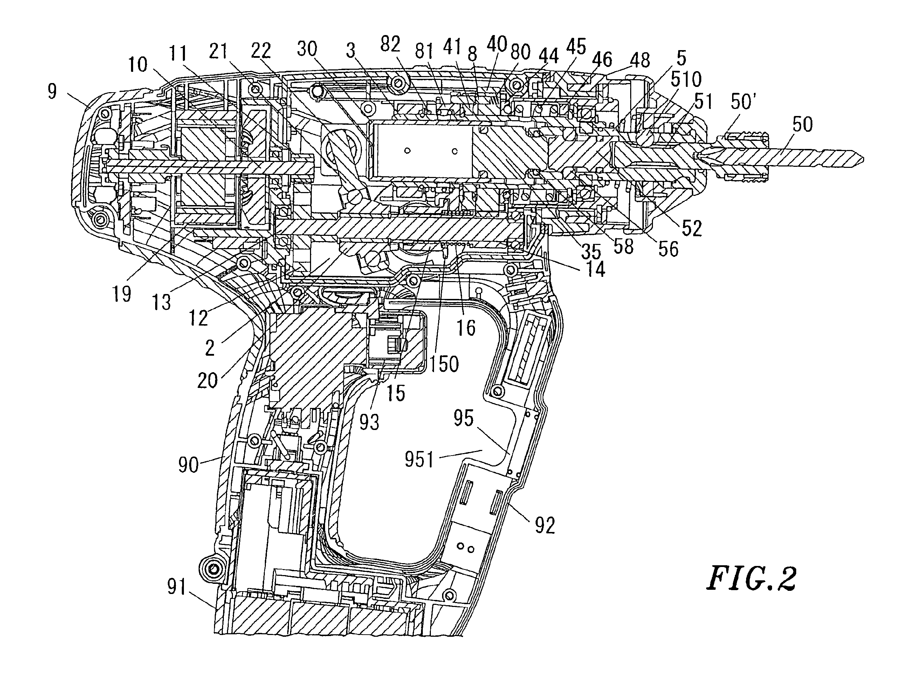

First, a hammer drill which is a power impact tool capable of installing thereto an adapter 50' in accordance with the present invention will be discussed. Referring to Figs. 2, 3, 4 and 6, reference numeral 9 designates a housing with which a grip portion 90 is formed integrally so as to extend downwardly therefrom. A battery pack 91 is detachably attached to the bottom of the grip portion 90. A housing-reinforcing connecting portion 92 is integrally formed between the bottom frontal end of the grip portion 90 and the front end of the housing 9. Reference numeral 93 in the drawings designates a trigger switch disposed at a base portion of the grip portion 90. Disposed within the rear end portion of the housing 9 is a motor 19 that can be activated or deactivated by the actuation of the trigger switch 93 and also can change its direction of rotation in response to the manipulation of a direction-changing lever 94. The housing 9 includes a main body 100 accommodating moving parts including a chuck portion 51 and the motor 19 at a front end and a rear end portion thereof, respectively; a grip portion 90 having the base portion connected to a central portion of the main body and the bottom (or free) end portion accommodating the battery pack 91; and the reinforcing connecting portion 92.

A connecting shaft 13 is operatively connected to an output shaft 10 of the motor 19 through gears 11 and 12. The connecting shaft 13 is provided at its front end with a pinion 14 integrally formed therewith. A motion conversion member 2 is disposed at an intermediate part of the connecting shaft 13. The motion conversion member 2 includes a rotating portion 20 affixed to and rotatable with the connecting shaft 13 as a unit, an outer race 21 rotatably fitted to an inclined surface of the rotating portion 20, and a rod 22 protruding from the outer race 21. The rod 22 is connected to a piston 30 that can be moved within a cylinder 3 along an axial direction.

A collar 15 that forms the engaging clutch in cooperation with the rotating portion 20 is provided on the connecting shaft 13 in such a fashion that the collar 15 can rotate with the connecting shaft 13 as a unit and also can be slid in an axial direction with respect to the connecting shaft 13. The collar 15 is pressed against the rotating portion 20 by means of a spring 16 into engagement with the rotating portion 20 to thereby transfer the rotational force of the connecting shaft 13 to the rotating portion 20. As the rotating portion 20 makes rotational movement, the rod 22 and the outer race 21 whose rotation about the connecting shaft 13 is restrained by being connected to the piston 30 are subjected to oscillating movement. This causes the piston 30 to reciprocate in its axial direction.

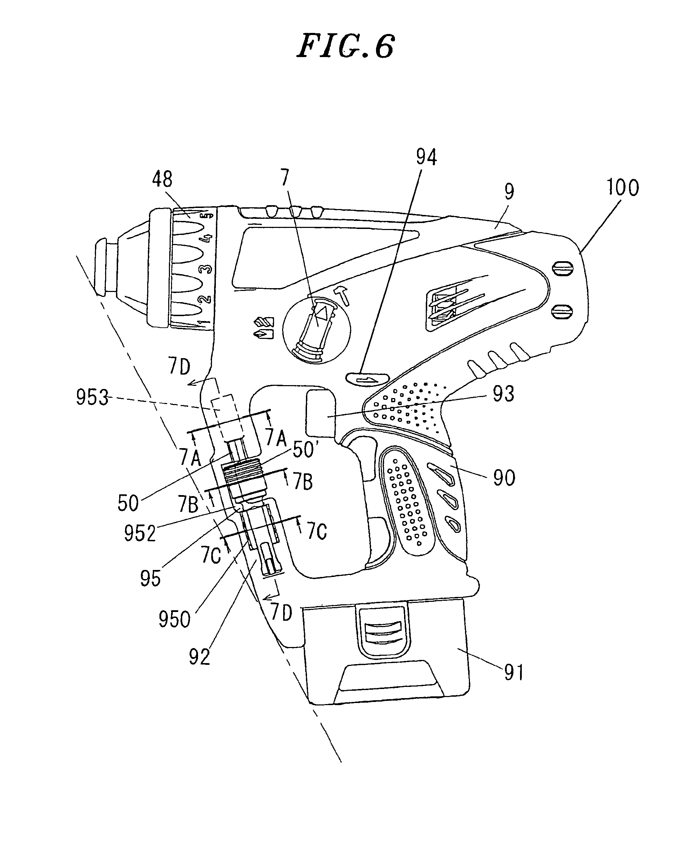

If a switching handle 7 (see Fig. 6) disposed on a flank side of the housing 9 is manipulated, the collar 15 moves forward against the spring 16 and is disengaged from the rotating portion 20. Under this condition, no rotational force is transferred to the rotating portion 20 and no reciprocating movement is induced in the piston 30.

The cylinder 3 is rotatable about it axis, on the outer circumferential surface of which a rotating body 40 having a gear meshed with the pinion 14 of the connecting shaft 13 is coupled for sliding movement in an axial direction of the cylinder 3 and also for rotational movement with respect to the cylinder 3. At one side of the rotating body 40, a clutch plate 41 is secured to the cylinder 3.

The rotating body 40 is of a ring shape and has a plurality of axially penetrating holes into which steel balls 42 are received. A clutch spring 45 is disposed to press a ball retainer (thrust plate) 44 against the steel balls 42. Pressing action of the clutch spring 45 brings the steel balls 42 into engagement with conical engaging recesses formed on the clutch plate 41.

During the time when the steel balls 42 retained in the holes of the rotating body 40 are engaged with the recesses of the clutch plate 41, the rotating body 40 rotates about the axis of the cylinder 3 together with the clutch plate 41 as a unit, thereby ensuring that the rotational force of the connecting shaft 13 is transmitted to the cylinder 3 through the rotating body 40 and the clutch plate 41. The clutch spring 45 that makes contact with the ball retainer 44 at one end is supported at the other end by means of a movable plate 46 lying around the outer periphery of the cylinder 3. Along with the rotation of a clutch handle (or a dial) 48, the movable plate 46 can be moved in an axial direction of the cylinder 3 to thereby change the level of compression of the clutch spring 45.

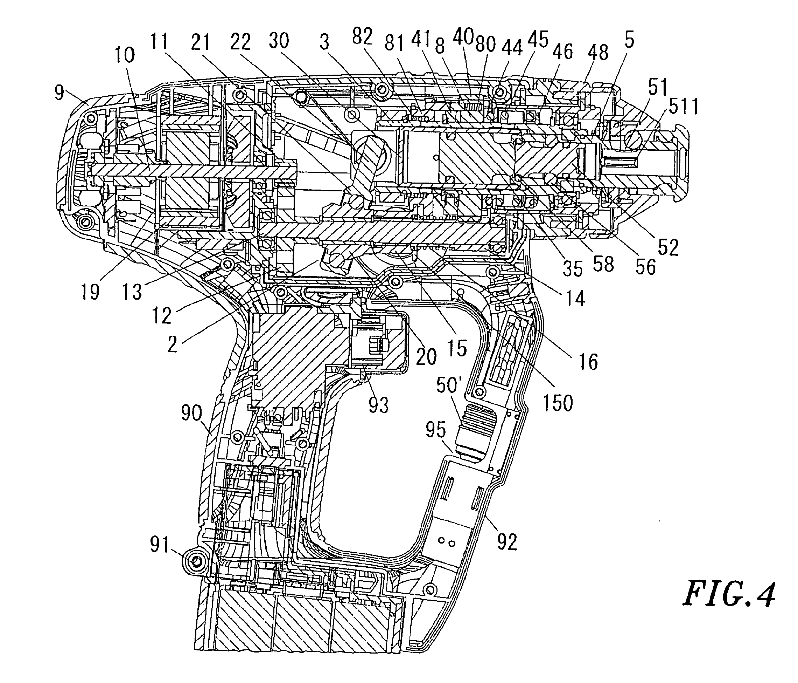

A pin 8 for directly coupling the rotating body 40 serving as a driving member to the clutch plate 41 functioning as a driven member (see Fig. 4) is provided at the rotating body 40. As the pin 8 is pressed by the spring 80 to protrude toward and engage with the clutch plate 41, the rotating body 40 and the clutch plate 41 get directly coupled to each other, thus ensuring that the rotational force of the rotating body 40 is constantly transferred to the clutch plate 41 and the cylinder 3.

A conversion plate 81 is disposed around the outer circumference of the cylinder 3 in an axially movable manner. If the conversion plate 81 is pressed by a spring 82 to move forward, the distal end of the direct-coupling pin 8 is placed at a boundary surface of the rotating body 40 and the clutch plate 41 as shown in Fig. 2, thus releasing the direct coupling between the rotating body 40 and the clutch plate 41. Further, when the collar 15 is moved into engagement with the rotating portion 20, the conversion plate 81 is pressed by the collar 15 and moves backward against the spring 82, thus allowing the pin 8 to directly couple the rotating body 40 to the clutch plate 41.

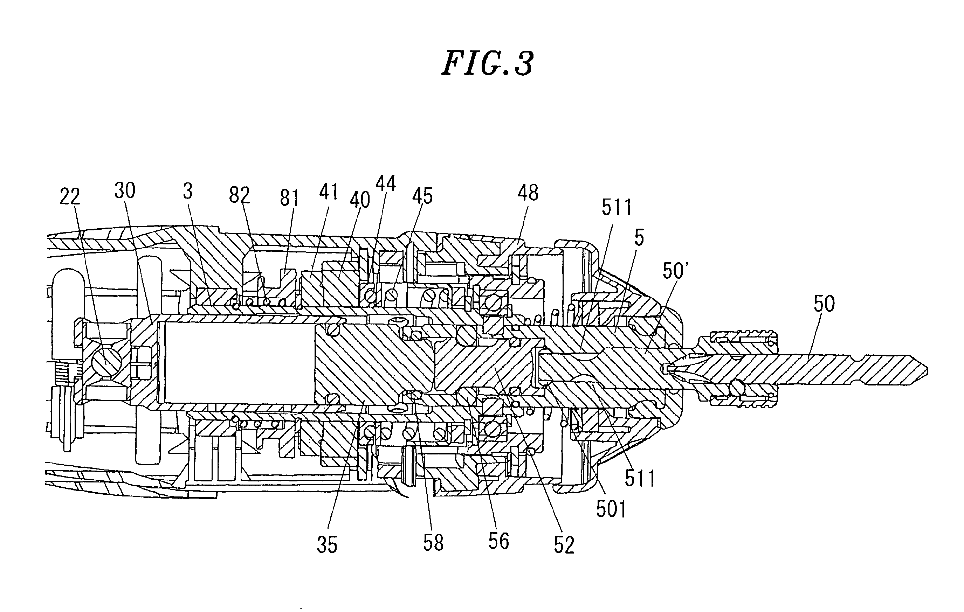

A spindle 5 is attached to the axial front end of the cylinder 3 for unitary rotation with the cylinder 3. The spindle 5 is provided at its axial front end with the chuck portion 51 for holding an output bit 50. The chuck portion 51, which corresponds to an SDS-Plus (Special Direct System Plus) type shank indent to be held by the chuck portion, includes a removal-inhibiting ball (or sprung ball) 510 and a rotation-transferring internal protrusion (or wedge) 511 (see Fig. 3). The chuck portion 51 is designed to hold the output bit 50 in such a manner that the output bit 50 can be rotated with the chuck portion 51 as a unit while sliding axially within a predetermined range of movement.

The piston 30 is of a cylindrical shape having a closed rear end and an opened front end. A striker 35 is slidably received within the piston 30. As the piston 30 makes reciprocating movement, the striker 35 is also caused to reciprocate, at which time the air within the space of the piston 30 enclosed by the striker 35 functions as an air spring. By the reciprocating movement thus caused, the striker 35 applies a striking force to the output bit 50 in an axial direction through an intermediate member 52 axially slidably retained within the spindle 5. Reference numeral 56 in the drawings designates a ball for preventing the intermediate member 52 from being backwardly removed out of the spindle 5.

Figs. 2 and 3 illustrate a striking-motion-deactivated mode, i.e., a condition devoted to screw tightening. In order to attain this mode, the collar 15 is caused to move forward by the manipulation of the switching handle 7, thus releasing the engagement between the collar 15 and the rotating portion 20. Concurrently, the flange portion 150 of the collar 15 removes the pushing force applied to the conversion plate 81, in response to which the conversion plate 81 moves forward under the pressing force of the spring 85 to push the direct-coupling pin 8. This releases the direct coupling between the rotating body 40 and the clutch plate 41. Thus, the rotational force that the rotating body 40 receives from the pinion 14 of the connecting shaft 13 is transferred to the spindle 5 through the steel balls 42, the clutch plate 41 and the cylinder 3. At this moment, an 0-ring 58 disposed on the rear inner circumference of the spindle 5 is resiliently engaged with the front outer circumference of the striker 35, thereby preventing the striker 35 and the intermediate member 52 from any axial movement. Accordingly, no inadvertent movement is caused to the striker 35 and the intermediate member 52.

In the process of tightening, e.g., a screw, through the use of the rotating output bit 50 under the striking-motion-deactivated mode, if the load torque becomes greater than the engaging force between the steel balls 42 and the clutch plate 41 imparted by the clutch spring 45, the steel balls 42 get released from the engaging recesses of the clutch plate 41, thus interrupting the transfer of the rotational force from the rotating body 40 to the clutch plate 41 (cylinder 3). This restrains the tightening torque.

The tightening torque can be increased by turning the clutch handle 48 as set forth above and displacing the movable plate 46 backward to increase the level of compression by the clutch spring 45. This means that the rotating body 40 and the clutch plate 41 cooperate with the steel balls 42, the movable plate 46 and the clutch spring 45 to form a torque-adjusting clutch 4. Further, when the clutch spring 45 has been compressed to the maximum extent by the manipulation of the clutch handle 48, the steel balls 42 are kept in a condition that it cannot be escaped from the engaging recesses. This condition is suitable for what is called a drilling task.

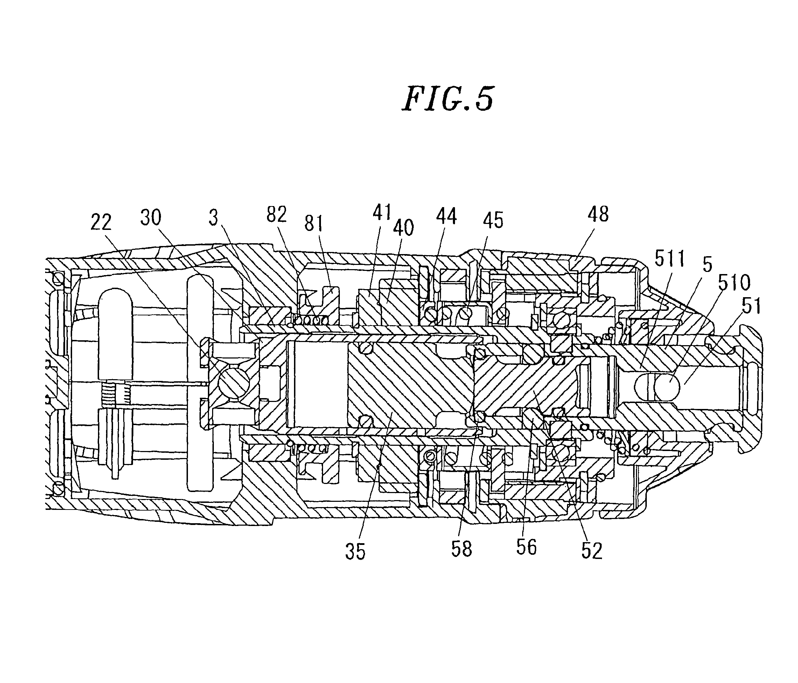

Under the situation illustrated in Figs. 4 and 5 wherein the collar 15 is moved backward into engagement with the rotating portion 20 upon manipulating the switching handle 7, the collar 15 causes the conversion plate 81 to move backward against the spring 82, thus ensuring that the rotating body 40 and the clutch plate 41 are directly coupled by the direct-coupling pin 8. Accordingly, the piston 30 is reciprocated by the motion conversion member 2, while the cylinder 3 and the spindle 5 are rotatably driven at all times. In this connection, as the output bit 50 is pressed against an object to be drilled, the output bit 50 and the intermediate member 52 are moved backward, to thereby push the striker 35 in a rearward direction beyond the position wherein the striker 35 is retained in place by the 0-ring 58. Thus, the reciprocating movement of the piston 30 leads to the reciprocating movement of the striker 35, which means that the striker 35 is in condition for applying a striking force to the output bit 50 in an axial direction through the intermediate member 52. This ensures that the rotational force and the axial striking force are transferred to the output bit 50.

The switching handle 7 is adapted to displace the collar 15 out of engagement with the rotating portion 20. The pressing force of the spring 16 is used for causing the collar 15 to move toward and smoothly engage with the rotating portion 20. The spring 16 is designed to have a pressing force greater than that of the spring 82 for pressing the conversion plate 81. Furthermore, the pressing force of the spring 82 is greater than that of the spring 80 for pressing the direct-coupling pin 8.

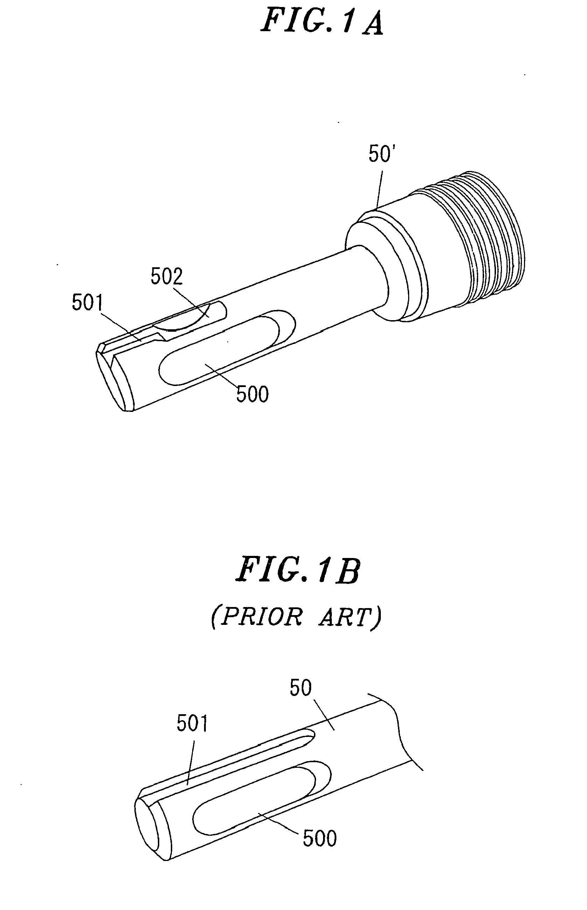

In the meantime, an output bit 50 such as a drill bit or a driver bit is provided without an SDS-Plus type shank for use with the hammer drill and therefore is mounted with the use of an adapter 50' having the SDS-Plus type shank. The SDS-Plus type shank employed in the adapter 50' differs somewhat from a typical SDS-Plus type shank shown in Fig. 1B.

More specifically, as illustrated in Fig. 1A, the SDS-Plus type shank of the adapter 50' is the same as the typical SDS-Plus type shank in that the adapter 50' has a closed groove 500 to engage with the removal-inhibiting ball 510; and a slide groove 501 with which the rotation-transferring internal protrusion 511 is slidingly engaged, the closed groove 500 being closed at an end of the shank portion whereas the slid groove 501 being opened at the end of the shank portion. A distinctive feature of the adapter 50' resides in that the axial length of the slide groove 501 measured from the rear end of the shank is short. In other words, at the time of mounting the adapter 50' into the chuck portion 51, the depth of insertion of the adapter 50' is restrained by the stopping action of the internal protrusion 511. This prevents the adapter 50' from moving backward into contact with the front end of the intermediate member 52 at its rear end.

Thus, even when the output bit 50 such as a drill bit or a driver bit is mounted through the adapter 50' in the striking-motion-activated mode, i.e., hammer drill mode, where the rotational force and the striking force are applied jointly, there lies no possibility that the striking force is applied to the adapter 50'. This also precludes the possibility that the adapter 50', the output bit 50 such as a drill bit or a driver bit, and the screw or the like in contact with the distal end of the output bit 50 are damaged by the striking vibration. In addition, the striker 35 continues to be retained in position by means of the O-ring 58 for the reasons noted above.

In the event that, the output bit 50, which is a hammer drill bit having the typical SDS-Plus type shank illustrated in Fig. 1B, is mounted to the chuck portion 51, it can be moved backward to such an extent that the rear end of the output bit 50 makes contact with the intermediate member 52. Furthermore, the striker 35 can be displaced backward through the intermediate member 52 beyond the position where the striker 35 is retained in place by means of the O-ring 58, in which condition the striking force as well as the rotational force is applied to the output bit 50.

The slide groove 501 of the adapter 50' differs not only in length but also in inner end shape from that of the typical shank. The internal protrusion 511 has a front end comprised of a flat inclined surface. For this reason, if the front end of the internal protrusion 511 makes contact with the inner end of the slide groove 501 of the typical shank shown in Fig. 1B, the side edges of the inner end of the slide groove 501 can get worn out. To avoid such a situation, the slide groove 501 of the adapter 50' is designed to have a slant inner end surface 502 capable of making surface-to-surface contact with the front end of the internal protrusion 511.

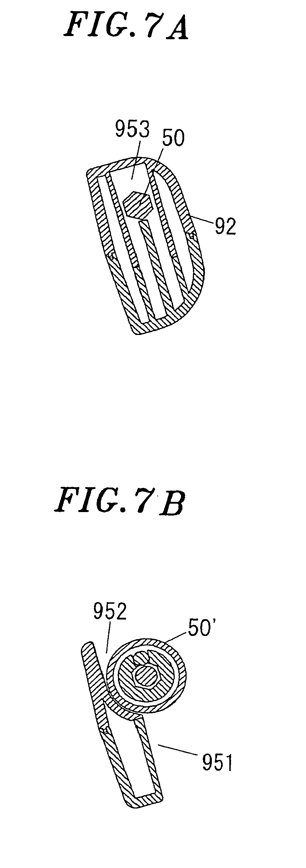

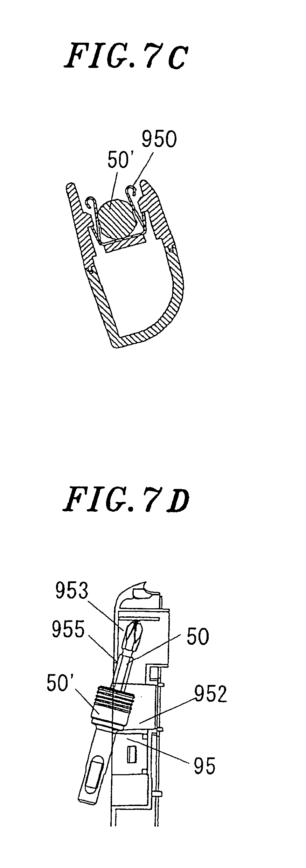

Furthermore, the adapter 50' may be stored, when not in use, within a holder portion 95 provided in the connecting portion 92 of the housing 9. As depicted in Figs. 6 and 7, the holder portion 95 is in the form of a recessed space opened to one side of the connecting portion 92. The holder portion 95 has a spring plate 950 for retaining the shank portion of the adapter 50', an enlarged recess part 952 for receiving the large diameter chuck portion of the adapter 50', and a void part 953 for accommodating the output bit 50 when the adapter 50' is stored with the output bit 50 attached thereto. At the other side of the enlarged recess part 952, the connecting portion 95 has a reduced thickness to provide an access space 951 through which allows the fingers of a user to gain access to the large diameter chuck portion of the adapter 50' to take out the adapter 50'.

In order to store the adapter 50' carrying the output bit 50 in the holder portion 95 with no removal of the output bit 50, the front end of the output bit 50 is inserted into the void part 953 as illustrated in Fig. 7D, after which the large diameter chuck portion of the adapter 50' is received within the enlarged recess part 952 and the shank portion of the adapter 50' is pushed into the seat portion of the spring plate 950. The above-noted storing operations are conducted in the reverse order to take out the adapter 50'.

In addition to the above, the connecting portion 92 is shaped not to protrude forward over a line joining the lower end of the battery pack 91 and the front end of the hammer drill (see Fig. 6). This is to prevent any damage of the connecting portion 92 which would otherwise be caused by a shock occurred when the hammer drill is inadvertently fallen in the frontward direction.

In the embodiment of the present invention, it is further noted that a SDS-top or a SDS-max type shank can also be used in place for the SDS-Plus type shank instead. Further, there are typically two wedges and two sprung balls employed for the shank. However, as for simplicity purpose, only one set of the wedges and the sprung balls are discussed as shown in Figs. 1A and 1B. Likewise, there are typically two to three slide grooves and two closed grooves to be used in the embodiment of the present invention, despite only one set of the above is discussed as well.

While the invention has been shown and described with respect to the embodiments, it will be understood by those skilled in the art that various changes and modification may be made without departing from the scope of the invention as defined in the following claims.

## Claims

1. A power impact tool adapter for use with a power impact tool operating in one of a striking-motion-activated mode for transferring a rotational force and applying a striking force in an axial direction of rotation to a bit and a striking-motion-deactivated mode for transferring only the rotational force to the bit, the power impact tool including a striking member applying the striking force to the bit and a chuck for holding the bit, the chuck being adapted to accommodate an SDS (Special Direct System) shank and having sprung balls for preventing the bit from being released from the chuck and wedges for applying the rotational force to the bit, the adapter, for use in installing an output bit to be used in the striking-motion-deactivated mode to the power impact tool, comprising:
a shank portion to be held by the chuck;
closed grooves to be mated with the sprung balls; and
slide grooves to be slidably mated with the wedges, the closed grooves and the slide grooves being formed on a peripheral surface of the shank portion,
wherein an axial length of each slide groove having one end in contact with an end of the shank portion is shorter than that of a slide groove of the SDS shank such that the end of the shank portion is prevented from contacting the striking member of the power impact tool by a positional restriction in the axial direction set by the slide grooves and the wedges.

2. The power impact tool adapter of claim 1, wherein the other end of each slide groove has a slanted surface adapted to match with an end surface shape of each wedge.

3. The power impact tool adapter of claim 1, wherein the SDS shank is an SDS-Plus shank.
